# EUROPEAN PATENT APPLICATION

(11) **EP 4 134 275 A1**
(43) Date of publication of application: **15.02.2023**
(21) Application number: 21197084.3
(22) Date of filing: 16.09.2021
(51) Int. Cl.: B60P 7/06

(54) **AIRBAG VALVE SYSTEM**

(30) Priority: 10.08.2021 TR 202112631
(71) Applicant: ABP Airbag Production Kft., Budapest (HU)
(72) Inventor: ENGINSU, HATICE KÜBRA, MANISA (TR)
(74) Representative: Yamankaradeniz, Kemal

(57) **Abstract**

The invention particularly relates to an airbag valve system which is positioned between loads transported from one location to another by vehicle in the transportation sector and which prevents the loads from moving and being physically damaged during the transportation process by being air-inflated, facilitates the positioning and inflation of cargo airbags, increases the efficiency and speed of the inflation process, prevents the formation of undesired air leaks/leaks after the process and the damage during the storage and/or transportation of cargo airbags that do not contain air, reduces the production, transportation and storage costs, and the time of production and application processes.

## Description

### Technical Field

The invention relates to an airbag valve system which facilitates the positioning and inflation of cargo airbags, prevents air leaks after inflation and damage during storage and/or transportation of unused cargo airbags.

The invention particularly relates to an airbag valve system which is positioned between loads/cargo transported from one location to another by vehicle in the transportation industry and which prevents the loads/cargo from moving and being physically damaged by the impact during the transportation process by being air-inflated, facilitates the positioning and inflation of cargo airbags, increases the efficiency and speed of the inflation process, prevents the formation of undesired air leakages/leaks after the process and the damage during the storage and/or transportation of cargo airbags that do not contain air.

### Present State of the Art

The cargo airbags are used for preventing the load/cargo transported from one location to another by vehicles such as containers, trucks, trains, and ships from being subject to impact and damage by moving during the transportation process in the transportation industry. After the cargo airbags are positioned between the loads, the loads are prevented from coming into contact with each other, moving during the transportation process and/or being damaged by the impact effect by filling them with air. Air pumps called inflators are used so as to inflate said cargo airbags and the air delivered by the inflator is transferred into the cargo airbag through an air valve located on the cargo airbag. The air valve is closed tightly after the inflation process is completed and thus the air inside the cargo airbag is prevented from leaking out.

Three different types of air valves are generally used in existing cargo airbags. In the first of these, spring air valves that can be opened and closed by a spring mechanism, the air passage is started or stopped by means of a spring located in the valve body. After the inflation process is completed, a sealing gasket located on the air cap is used so as to prevent air leakages. Furthermore, in the spring air valves, an externally used protective cover is used so as to prevent air leaks after inflation, to protect the part that ensures the installation of the spring from external factors and to prevent accidental opening of the valve. However, in spring air valves, the duration of the inflation process increases and there is a loss of efficiency since said air cap is not fully opened during the inflation process and the air hitting the air cap moves in the opposite direction to the air transmission. The process of installing and/or removing the inflator from the air valve is quite difficult due to the heavy and bulky structure of the inflators used to open the air cap. Furthermore, the process of attaching and removing said protective cap by the user before and after each inflation process causes extension of the total operation time, it also causes negative situations such as the increase in the total production cost and production time in the process of producing air valves in large numbers and in series.

In the second type of air valves, a gasket made of PVC (polyvinyl chloride) material is used and its sealing property is provided by a stopper. Since there is no automatic closing system in this type of air valves, the air inlet/outlet opening of the valve must be closed manually by the user. However, the inflation process in these air valves takes quite a long time compared to spring air valves and negative conditions such as the cargo airbag losing its function occur with the dislocation of said plug with the effect of increasing pressure force in the cargo airbag during the transportation process. Furthermore, during the production process, the PVC gasket has to be placed manually by the user, thus this causes an increase in production time and cost. The third type of air valves used in existing cargo airbags has an air cap that can be opened and closed by the effect of internal pressure. A plastic can lid closed in pass-manner is used so as to prevent air leak after the inflation process. However, opening and closing the lid of the can is quite difficult for the user and in case it is not closed completely, it causes air leaks. In addition to said problems, in all three types of air valves, after the air valve is positioned on the sides of the cargo airbag and the cargo airbag is placed between the loads/cargoes during transportation and/or storage of unused cargo airbags while facilitating their inflation, it causes the air valves to be separated from their connection points and damaged. In case the air valve is positioned on the planar surfaces (sides) of the cargo airbag, it is difficult to position cargo airbags between loads/cargo, inflating the cargo airbags is very difficult and troublesome, since it is difficult to access for the inflator to access the air valve after positioning.

In a patent document numbered US5437301A, which is in the state of the art, an inflation valve system developed specifically for cargo airbags that assists in filling air and discharging air from the cargo airbag is disclosed. Said system comprises a connection element which is suitable for attachment to an inflation element/inflator providing air transmission, the transmission hose that provides the transfer of the air transmitted from the inflation element, first body part in circular form, which is connected with the transmission hose, second body part that is impermeably connected to the cargo airbag and allows air delivery to be controlled. Said second body part includes the connecting arms that provide fixation to the cargo airbag, the driver element that provides the start or stop of the air transmission, and the spring that provides the movement of the driver element. The spring is compressed and the air passage is allowed by bringing the drive element to an open position by connecting the end of the transmission hose with a pass-structure to the first body part. There is no solution within the document for preventing damage to the air valve and facilitating the inflator connection process after positioning it between loads during the transport and/or storage of the cargo airbag.

In another patent document numbered US7008155B2 of the state of the art, a cargo airbag which, improves the sealing property of the air valve by using adhesive material is disclosed. The air valve used in said cargo airbag comprises, a body element that contains the circular air opening that allows air passage and is fixed to the cargo airbag by means of adhesive material, the cover with a pass structure that allows the air opening to be closed, flap cover that opens during the inflation process to allow air passage through the air opening and to stop the air passage by closing with the effect of pressure in the cargo airbag after inflation. Therefore, air leaks are prevented after inflation process. However, if the flap cover is not fully opened during the inflation process, air transmission is negatively affected due to the air moving in the opposite direction by hitting the flap cover, causing the inflation process to take a long time. Furthermore, there is no solution within the document for preventing damage to the air valve and facilitating the inflator connection process after positioning it between loads during the transport and/or storage of the cargo airbag.

As a result, it is required to develop an airbag valve system which facilitates the positioning and inflation of cargo airbags between loads, increases the efficiency of the inflation process, and prevents undesired air leaks/leakages after inflation and damage during storage and/or transportation of cargo airbags that do not contain air.

### Summary of the Invention

The present invention is related to an airbag valve system which fulfills the abovementioned requirements, eliminates all disadvantages and brings some additional advantages.

The main aim of the inventive airbag valve system is to obtain an airbag valve system that increases the efficiency of the inflation process of cargo airbags and reduces the time spent in the inflation process.

Another aim of the invention is to obtain an airbag valve system that ensures to fix the inflator that obtain the required air for performing the inflation process, into the valve system easily and quickly during the inflation process.

Another aim of the invention is to obtain an airbag valve system that reduces the total physical dimensions of the system, the total amount of materials and costs needed for production, and ensures an easy and practical way of use without the need for external and bulky locking parts to fix the inflator.

Another aim of the invention is to obtain an efficient airbag valve system that increases the total number of airbags that can be stored or transported during transportation or storage and reduces transportation costs, by reducing the physical space covered on the airbag to which it is connected.

Another aim of the invention is to obtain an airbag valve system accelerates the inflation process, reduces the amount of material used during the production process, the total production cost and the production time without the need for the protection cap used to close and protect the valve after inflation.

Another aim of the invention is to obtain a practical and efficient airbag valve system which facilitates the positioning of cargo airbags between loads and the inflation of cargo airbags positioned between loads.

Another aim of the invention is to obtain a safe airbag valve system that prevents the air inside the cargo airbag from leaking out after the inflation process.

Another aim of the invention is to obtain an airbag valve system that prevents the cargo airbags without air from being damaged by physical effects such as crushing and/or impact during storage and/or transportation.

Another aim of the invention is to obtain an airbag valve system that reduces the total production and post-use recycling cost.

In order to achieve the above aims in the most general form, the airbag valve system which is suitable for use with at least one cargo airbag positioned between loads being transported from one location to another by a vehicle and which inflates to prevent movement and physical damage to the loads, which facilitates the positioning and inflation of the cargo airbag, increases the efficiency and speed of the inflation process, and prevents the formation of air leaks and damage to the cargo airbags comprises the following, at least one fixing element that comprises at least one first opening, enables airtight fixation of the airbag valve system on the cargo airbag; at least one guiding element that comprises at least one second opening, provides the creation of an air duct suitable for air to pass through and directs the air towards the cargo airbag; at least one insulating element that ensures that the first opening is opened during inflation of the cargo airbag and that, upon completion of its operation, the air conduction opening is closed in such a way that no air leak occurs; at least one interconnecting element that enables the insulating element to be moved in the first direction and the air to be transferred into the cargo airbag; at least one movement element which ensures that a force is applied on the insulating element in a way that acts in the second direction, ensures that the interconnecting element is fixed during the inflation process and by removing the interconnecting element ensures that the insulating element closes the first opening tightly and airtight.

The structural and characteristic features of the present invention will be understood clearly by the following drawings and the detailed description made with reference to these drawings and therefore the evaluation shall be made by taking these figures and the detailed description into consideration.

### Brief Description of The Drawings

In order to understand the advantages of the present invention with its structure and additional elements, it shall be evaluated with the following defined figures.
Figure - 1: Is a perspective view of the inventive airbag valve system.
Figure - 2: Is a frontal view of the inventive airbag valve system.
Figure - 3: Is a sectional view of the inventive airbag valve system.
Figure - 4: Is another frontal view of the inventive airbag valve system.

### References

- 1.: Fixing element
- 1a.: First opening
- 2.: Guiding element
- 2a.: Second opening
- 3.: Insulating element
- 4.: Interconnecting element
- 4a.: Housing
- 5.: Movement element
- 6.: Positioning element
- 7.: Connection extension
- 7a.: Protrusion

### Detailed Description of the Invention

In this detailed description, the preferred embodiments of the inventive airbag valve system are described only for clarifying the subject matter in a manner such that no limiting effect is created.

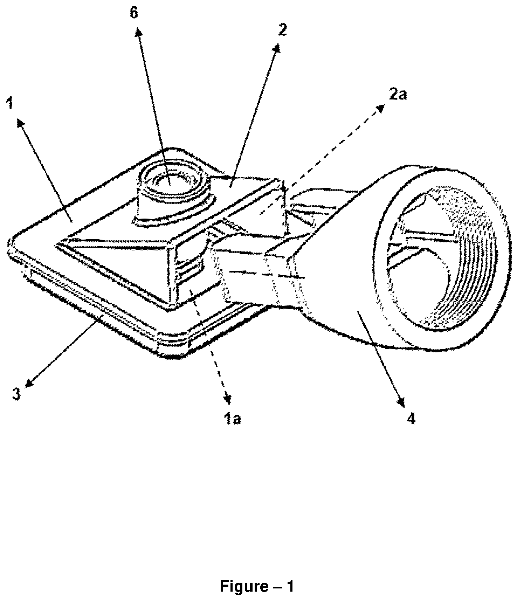

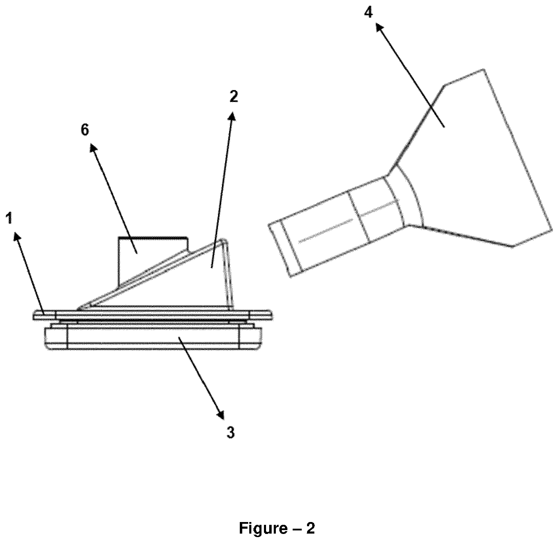

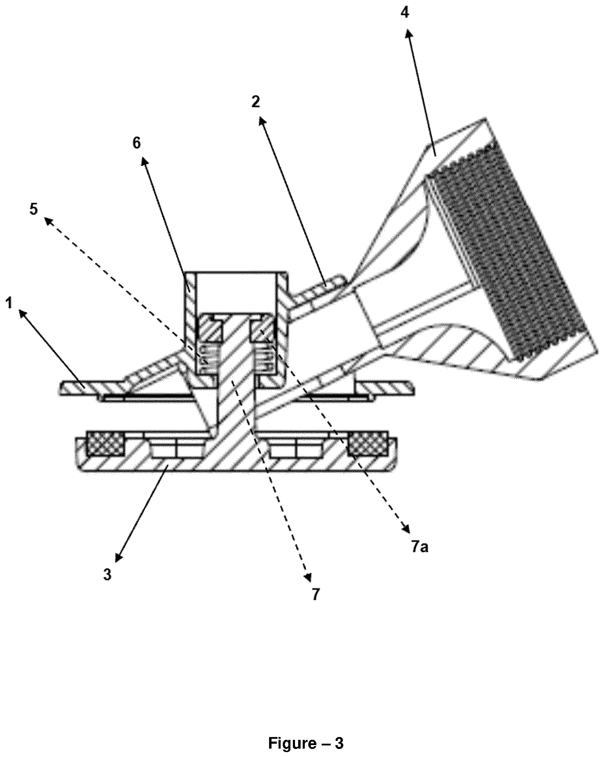

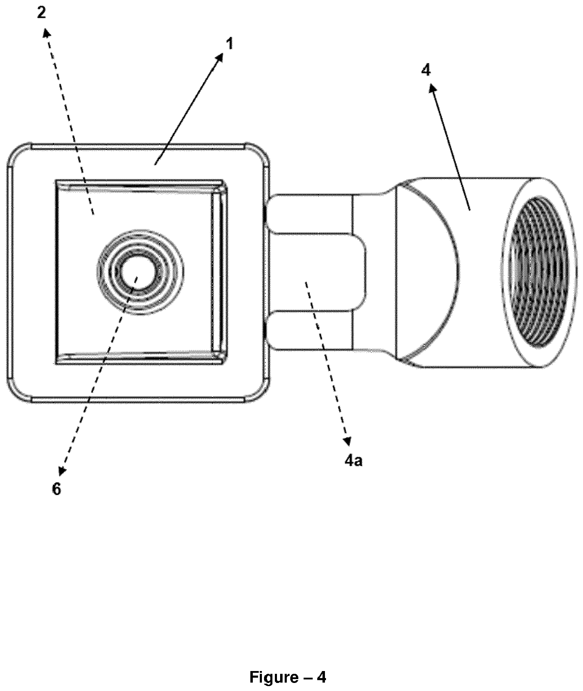

An airbag valve system which is given in Figure 1 in an illustrative manner, is developed with the present invention, is positioned between loads/cargo transported from one location to another by vehicle and prevents the loads from moving and being physically damaged by the impact during the transportation process by being air-inflated, is suitable for use with at least one cargo airbag and at least one air transmission system preferably with an inflator structure that allows the cargo airbag to be inflated with air, facilitates the positioning and inflation of cargo airbags, increases the efficiency and speed of the inflation process, prevents the formation of undesired air leaks/leaks after the process and the damage during the storage and/or transportation of cargo airbags that do not contain air comprises at least one fixing element (1) which is suitable for positioning on a planar surface of the cargo airbag, having at least one first opening (1a), preferably rectangular in shape, allowing air to pass through it, ensures that the airbag valve system is airtightly fixed on the cargo airbag, preferably in the form of a rectangular and flat frame. At least one guiding element (2) which is in connection with the surface of the fixing element (1) distal to the cargo airbag (A), extends in a way such that the surface away from the fixing element (1) converges to the fixing element (1) by an angle value, is positioned close to one side of the fixing element (1) by covering the side of the first opening (1a) distal to the cargo airbag and positioned to move away from the fixing element (1) by an angle value, comprises at least one second opening (2a), preferably quadrangle, provides the creation of an air duct suitable for air to pass through and directing the air sent from the air transmission system into the cargo airbag. System also comprises at least one insulating element (3) which is connected to the surface of the fixing element (1) close to the cargo airbag, close to the second opening (2a) and movable in a first direction away from the fixing element (1) and in a second direction converging to the fixing member (1), moves in the first direction, allowing the first opening (1a) to open and allow air passage during the inflation of the cargo airbag, ensures that the air transmission opening (1a) is closed in such a way that no air leakage occurs by moving in the second direction with the air pressure inside the cargo airbag upon completion of the inflation process and stops the air passage and is preferably in the form of quadrangle and flat plate. The system further comprises at least one interconnecting element (4) whose end far from the fixing element (1) is suitable for connecting to the air transmission system, whose end close to the fixing element (1) is suitable for placing in the second opening (2a) and which and has a structure suitable for air transmission through, is placed in the second opening (2a), which allows the insulating element (3) to be moved in the first direction and the air sent from the air transmission system to be transferred into the cargo airbag; at least one movement element (5) which is connected with the guiding element (2) and the insulating element (3), ensures the insulation element (3), which is made of a flexible material, to be moved in the first direction and provides a force to be stretched on the insulating element (3) such that it moves in the second direction and fixes the position of the interconnecting element (4) by preventing it from coming out of the second opening (2a) during the inflation process and ensures that the insulating element (3) closes the first opening (1a) tightly and airtightly by removing the interconnecting element (4) from the second opening (2a), preferably a spring positioned between the guiding member (2) and the insulating member (3) so as to extend perpendicular to the planar surface of the cargo airbag.

In an exemplary embodiment of the airbag valve system developed with the present invention, the airbag valve system is fixed on a planar surface of the cargo airbag in a way that does not allow the formation of unwanted air leaks by means of the fixing element (1). When the interconnecting element (4), which is connected to the air transmission system, is placed into the second opening (2a), it is ensured that the end of the interconnecting element (4), which is close to the fixing element (1), passes through the first opening (1a) and extends into the cargo airbag by means of the guiding element (2). Thus, it is ensured that the interconnecting element (4) moves the insulating element (3) in the first direction by pushing, and that the first opening (1a) is opened to allow air passage. At this time, a force is applied in the second direction on the insulating element (3) by stretching the moving element (5). Thus, the interconnecting element (4) is prevented from coming out of the second opening (2a) during the inflation process and its position is fixed. After the inflation process is completed, it is ensured that the interconnecting element (4) is moved away from the first opening (1a) and is removed from the second opening (2a). In the meantime, by means of the movement element (5), it is ensured that the insulating element (3) is moved in the second direction and with the help of the compressed air in the cargo airbag, the insulating element (3) closes the first opening (1a) tightly and does not allow undesired air leaks to occur and air passage is stopped.

In a preferred embodiment of the invention, said airbag valve system comprises at least one interconnecting element (4) whose cross-section of the end farthest from said fixing element (1) is in a circular form and the cross-section of the end that is close to said fixing element (1) is in the form of a quadrangle pipe.

In another preferred embodiment of the invention, said airbag valve system comprises at least one housing (4a) which is located at the end of said interconnecting element (4) close to said fixing element (1), has a structure suitable for the placement of said movement element (5), ensures that said interconnecting element (4) is prevented from being attached to said movement element (5) during its movement within said air duct.

In another preferred embodiment of the invention, said airbag valve system comprises at least one positioning element (6) which is connected with said guiding element (2), has a structure suitable for placing said movement element (5) therein, enables said movement element (5) to be connected to the system and positioned to lie perpendicular to the planar surface of said cargo airbag, is preferably in the form of a hollow cylinder.

In another preferred embodiment of the invention, said airbag valve system comprises at least one connection extension (7) which comprises at least one protrusion (7a) at its far end from said insulating element (3), extends into said positioning element (6) in connection with the center point of said insulating element (3), which is suitable for connecting said movement element (5), ensures that said movement element (5) is compressed between said positioning element (6) by moving said insulation element (3) in said first direction and helps to obtain a force in said second direction.

Cargo airbags that do not contain air are prevented from being damaged during storage and/or transportation, positioning of cargo airbags between loads and inflating after positioning are facilitated by means of the airbag valve system developed with the present invention. Furthermore, it is ensured that the efficiency of the inflation process is increased and accelerated by preventing the movement of air in the opposite direction to the flow direction by directing the air delivered from the air transmission system directly into the cargo airbag by means of the guiding element (2). Undesired air leaks/leakages are prevented after inflation by means of the movement element (5) and the insulating element (3), and during the inflation process, it is ensured that the interconnecting element (4) is fixed in the system. Thus, an efficient and practical, safe airbag valve system is obtained, which reduces production and transportation costs, and reduces the production and application processes.

## Claims

1. An airbag valve system which is positioned between loads/cargo transported from one location to another by vehicle and prevents the loads from moving and being physically damaged by the impact during the transportation process by being air-inflated, is suitable for use with at least one cargo airbag and at least one air transmission system that allows the cargo airbag to be inflated with air, facilitates the positioning and inflation of cargo airbags, increases the efficiency and speed of the inflation process, prevents the formation of undesired air leaks/leaks after the process and the damage during the storage and/or transportation of cargo airbags that do not contain air, **characterized in comprising;**
- at least one fixing element (1) which is suitable for positioning on a planar surface of said cargo airbag, comprises at least one first opening (1a) that allows air to pass through, ensures that the airbag valve system is airtightly fixed on said cargo airbag;
- at least one guiding element (2) which is in connection with the surface of said fixing element (1) away from said cargo airbag (A), whose surface away from said fixing element (1) extends in such a way that converges to said fixing element (1), comprises at least one second opening (2a) that is located in a way to be close to one side of said fixing element (1) by covering the side of said first opening (1a) distal to said cargo airbag and to be away from said fixing element (1), provides the creation of an air duct suitable for air to pass through and directs the air sent from said air transmission system towards said cargo airbag;
- at least one insulating element (3) which is connected to the surface of said fixing element (1) close to said cargo airbag and close to said second opening (2a) and is moveable in a first direction away from said fixing element (1) by an angle value and in a second direction approaching said fixing element (1) by an angle value, ensures opening said first opening (1a) by moving in said first direction during inflation of said cargo airbag and allowing air passage, completing inflation process, ensures that said air transmission opening (1a) is closed in such a way that no air leakage occurs and air passage is stopped by moving in said second direction with the air pressure inside said cargo airbag;
- at least one intermediate connection element (4) whose end distal from said fixing element (1) is suitable for connecting to said air transmission system, end close to said fixing element (1) is suitable for settling within said second opening (2a) and which has a structure suitable for performing air transmission through connection element (4), ensures that said insulating element (3) is moved in said first direction by placing in said second opening (2a) and that the air sent from said air transmission system is transferred into said cargo airbag;
- at least one movement element (5) which is associated with said guiding element (2) and said insulating element (3), is made of a flexible material, ensures that a force is applied on said insulating element (3) in such a way that insulating element (3) moves in said second direction by stretching with said insulating element (3) moving in said first direction and ensures that said intermediate connection element (4) is fixed in its position by preventing connection element (4) from coming out of said second opening (2a) during the inflation process and ensures that said insulation element (3) closes said first opening (1a) tightly and airtightly by removing said intermediate connection element (4) from said second opening (2a).

2. An airbag valve system according to claim 1, **characterized in that;** said air transmission system is in an inflator structure.

3. An airbag valve system according to claim 1, **characterized in that;** said first opening (1a) is in quadrangle form .

4. An airbag valve system according to claim 1, **characterized in that;** said fixing element (1) is in quadrangle and plane frame form .

5. An airbag valve system according to claim 1, **characterized in that;** said second opening (2a) is in quadrangle form .

6. An airbag valve system according to claim 1, **characterized in that;** said insulating element (3) is in quadrangle and plane plate form .

7. An airbag valve system according to claim 1, **characterized in that;** said movement element (5) is a spring positioned between said guiding element (2) and said insulating element (3) to extend perpendicular to the planar surface of the cargo airbag.

8. An airbag valve system according to claim 5, **characterized in that;** said interconnecting element (4) whose cross-section of the end farthest from said fixing element (1) is in a circular form and the cross-section of the end that is close to said fixing element (1) is in the form of a quadrangle pipe.

9. An airbag valve system according to claim 1, **characterized in that;** said interconnecting element (4) comprises at least one housing (4a) which is located at the end close to said fixing element (1), has a structure suitable for the placement of said movement element (5), ensures that said interconnecting element (4) is prevented from being attached to said movement element (5) during its movement within said air duct.

10. An airbag valve system according to claim 1, **characterized in by comprising** at least one positioning element (6) which is connected with said guiding element (2), has a structure suitable for placing said movement element (5) therein, enables said movement element (5) to be connected to the system and positioned to lie perpendicular to the planar surface of said cargo airbag, is preferably in the form of a hollow cylinder.

11. An airbag valve system according to claim 1, **characterized in comprising** at least one connection extension (7) which extends into said positioning element (6) in connection with the center point of said insulating element (3), comprises at least one protrusion (7a) at far end from said insulating element (3), which is suitable for connecting said movement element (5), ensures that said movement element (5) is compressed between said positioning element (6) by moving said insulation element (3) in said first direction and helps to obtain a force in said second direction.
